# EUROPEAN PATENT APPLICATION

(11) **EP 4 765 447 A1**
(43) Date of publication of application: **24.06.2026**
(21) Application number: 25860982.5
(22) Date of filing: 21.08.2025
(51) Int. Cl.: H01M 50/533, H01M 50/534, H01M 50/183, C25D 5/12, C25D 5/02, C25D 7/06, B32B 15/20, B32B 15/01

(54) **ELECTRODE LEAD AND ELECTRODE LEAD MANUFACTURING METHOD**

(30) Priority: 26.08.2024 KR 20240114616; 18.08.2025 KR 20250114036
(71) Applicant: LG Energy Solution, Ltd., Seoul 07335 (KR)
(72) Inventor: KIM, Jin Hyung, Daejeon 34122 (KR); KIM, Mi Na, Daejeon 34122 (KR); YOON, Hye Jung, Daejeon 34122 (KR)
(74) Representative: Plasseraud IP
(86) International application number: PCT/KR2025/012714
(87) International publication number: WO 2026/049415

(57) **Abstract**

The present disclosure relates to an electrode lead and a method for manufacturing an electrode lead, and more specifically, to an electrode lead connected to an electrode assembly of a secondary battery that can be repeatedly charged and discharged and a method for manufacturing such an electrode lead. An electrode lead according to an embodiment of the present disclosure may include a first portion coupled to an electrode tab of an electrode assembly of a secondary battery; and a second portion connected to the first portion and protruding to the outside of a case of the secondary battery, wherein the first portion may be formed to have a narrower width than the second portion, and a plating layer may be formed on at least a part of the first portion and the second portion.

## Description

### TECHNICAL FIELD

### CROSS-REFERENCE TO RELATED APPLICATIONS

The present application is based on and claims priority from Korean Patent Application No. 10-2024-0114616, filed on August 26, 2024 and Korean Patent Application No. 10-2025-0114036, filed on August 18, 2025, with the Korean Intellectual Property Office, the disclosure of which is incorporated herein in its entirety by reference.

### TECHNICAL FIELD

The present disclosure relates to an electrode lead and a method for manufacturing an electrode lead, and more specifically, to an electrode lead connected to an electrode assembly of a secondary battery that can be charged and discharged and a method for manufacturing such an electrode lead.

### BACKGROUND ART

A secondary battery (rechargeable battery) is a battery that can be charged and discharged, unlike a primary battery that cannot be recharged. Low-capacity secondary batteries are used in small portable electronic devices such as mobile phones, laptop computers and camcorders, while high-capacity batteries are widely used as a power source for driving motors in hybrid vehicles or the like.

Such secondary batteries may have various structures. For example, secondary batteries may be classified into coin-type batteries, cylindrical batteries, prismatic batteries, and pouch-type batteries depending on the shape of the battery case. The electrode assembly mounted inside the battery case in secondary batteries has a laminated structure of electrodes and a separator, and may convert electrical energy into chemical energy or vice versa.

The electrodes constituting the electrode assembly may be divided into a coated portion coated with an active material and an uncoated portion not coated with the active material. The electrode uncoated portions within the electrode assembly are welded together to form an electrode tab, and the electrode tab may be coupled to an electrode lead and then connected to an external device.

It is important to reduce the resistance of the electrode lead for improving battery efficiency, and conventional electrode leads are designed in the shape of a cuboid rod having a width corresponding to the width of the electrode tab, which has imposed physical limitations in the design of fast-charging and high-power batteries.

### DISCLOSURE

### TECHNICAL PROBLEM

The present disclosure is designed to solve the problems of the related art, and therefore the present disclosure is directed to providing an electrode lead having a structure capable of minimizing electrical resistance and a method for manufacturing such an electrode lead.

### TECHNICAL SOLUTION

An electrode lead according to the present disclosure is an electrode lead connected to an electrode assembly of a secondary battery, and the electrode lead may include a first portion coupled to an electrode tab of the electrode assembly; and a second portion connected to the first portion and protruding to the outside of a case of the secondary battery, wherein the first portion may be formed to have a narrower width than the second portion, and a plating layer may be formed on at least a part of the first portion and the second portion.

Each of the first portion and the second portion may have a three-layer structure laminated in the order of an aluminum layer, a copper layer, and an aluminum layer.

The plating layer may be formed on a surface of the first portion where the copper layer is exposed and on a surface of the second portion where the first portion is connected.

The thicknesses of the plurality of aluminum layers may be identical, and the thickness ratio of the aluminum layer and the copper layer may be 1:1 to 1:8.

The plating layer may be made of a nickel material.

A lead film made of an insulating material may be attached to the first portion.

The lead film may cover a boundary area of the first portion that is in contact with the second portion.

A method for manufacturing an electrode lead according to the present disclosure is a method for manufacturing an electrode lead connected to an electrode assembly of a secondary battery, and the method may include a notching step of forming a plurality of notched grooves on one side of a metal plate surface; a plating step of forming a plating layer on one side of the metal plate surface and on the plurality of notched grooves; and a cutting step of cutting the metal plate surface in a linear direction from the center of each of the plurality of notched grooves to the other side of the metal plate surface.

The notching step may include a step of forming a plurality of notched grooves on one side of a metal plate surface having a three-layer structure laminated in the order of an aluminum layer, a copper layer, and an aluminum layer.

The notching step may include a step of forming a plurality of notched grooves at equal intervals on one side of the metal plate surface.

The plating step may include a step of forming a plating layer on one side of the metal plate surface and on a surface of the plurality of notched grooves where the copper layer is exposed.

The plating step may include a step of forming a plating layer made of a nickel material on one side of the metal plate surface and on the plurality of notched grooves.

Meanwhile, the method for manufacturing an electrode lead may further include a film attachment step of attaching a lead film made of an insulating material to the cut metal plate surface, which is performed after the cutting step.

The cut metal plate surface may include a first portion having a relatively narrow width and a second portion connected to the first portion and having a wider width than the first portion, and the film attachment step may be a step of attaching the lead film to a boundary area of the first portion that is in contact with the second portion.

### ADVANTAGEOUS EFFECTS

The electrode lead according to an embodiment of the present disclosure may include a first portion coupled to an electrode tab of an electrode assembly and a second portion connected to the first portion and protruding to the outside of a case of a secondary battery, wherein the first portion may be formed to have a narrower width than the second portion, and a plating layer may be formed on at least a part of the first portion. In this case, since a cross-sectional area of the portion of the electrode lead protruding to the outside of the case of the secondary battery may be set to be large, there is an effect of lowering the electrical resistance of the electrode lead.

### DESCRIPTION OF DRAWINGS

FIG. 1 is a view for comparing the width lengths of a first portion and a second portion in an electrode lead according to the present disclosure.
FIG. 2 is a view showing a state in which a plating layer is formed on the first portion of the electrode lead according to the present disclosure.
FIG. 3 is a view showing a state in which a lead film is attached to the first portion of the electrode lead according to the present disclosure.
FIG. 4 is a flowchart sequentially showing the steps of a method for manufacturing an electrode lead according to the present disclosure.
FIG. 5 is a view for describing a notching step in the method for manufacturing an electrode lead according to the present disclosure.
FIG. 6 is a view for describing a plating step in the method for manufacturing an electrode lead according to the present disclosure.
FIG. 7 is a view for describing a film attachment step in the method for manufacturing an electrode lead according to the present disclosure.

### BEST MODE

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, an electrode lead and a method for manufacturing an electrode lead according to the present disclosure will be described with reference to the drawings.

### Electrode lead

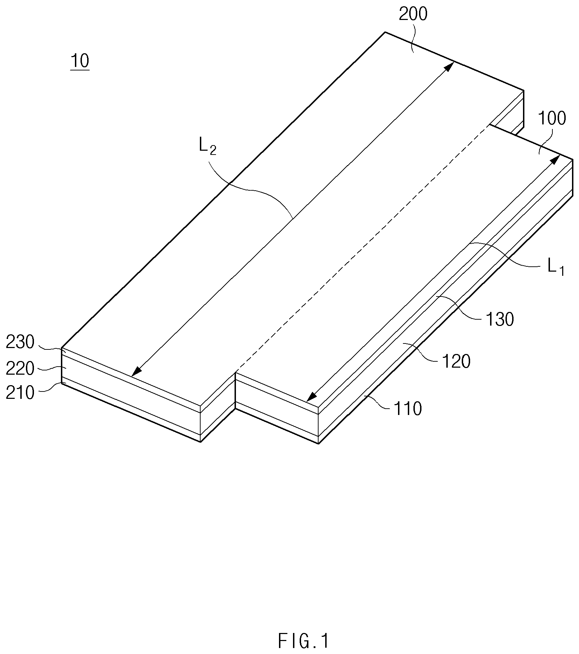

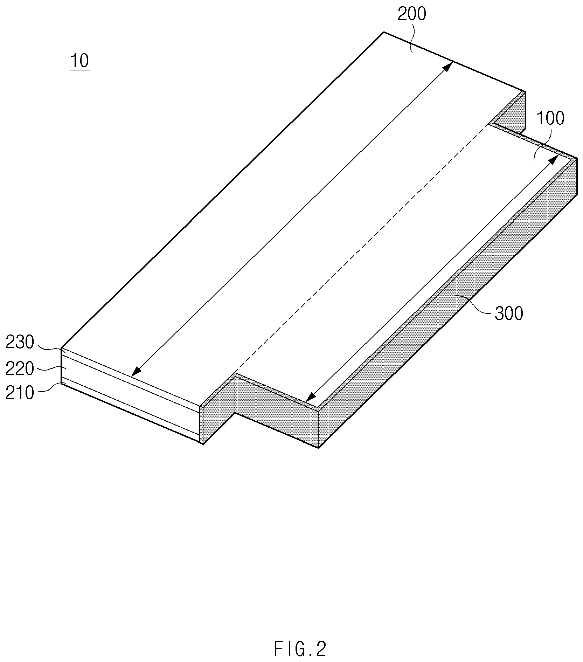

FIG. 1 is a view for comparing the width lengths of a first portion and a second portion in an electrode lead according to the present disclosure. FIG. 2 is a view showing a state in which a plating layer is formed on the first portion of the electrode lead according to the present disclosure.

Referring to FIGS. 1 and 2, an electrode lead 10 according to the present disclosure is an electrode lead 10 connected to an electrode assembly of a secondary battery, and may include a first portion 100 coupled to an electrode tab of the electrode assembly; and a second portion 200 connected to the first portion 100 and protruding to the outside of a case of the secondary battery. At this time, the first portion 100 may be formed to have a narrower width than the second portion 200, and a plating layer 300 may be formed on the first portion 100. Specifically, the plating layer 300 may be formed only on at least a part of the first portion 100 and the second portion 200. That is, the plating layer 300 may be formed on at least a part of the first portion 100 and/or at least a part of the second portion 200.

In the electrode lead 10 according to the present disclosure, the second portion 200 excluding the first portion 100 coupled to the electrode tab of the electrode assembly may have a wider width than the first portion 100. At this time, the electrode lead 10 has the second portion 200 having a relatively large cross-sectional area, so that the average cross-sectional area of the electrode lead 10 may also increase. Therefore, the electrode lead 10 according to the present disclosure has a relatively low overall resistance value, and thus may be suitable for the design of fast-charging and high-power batteries.

Specifically, the first portion 100 is a portion that is welded to the electrode tab of the electrode assembly, and thus the first portion 100 may have the same width as the electrode tab. On the other hand, the width of the second portion 200 that is not welded to the electrode tab may not be constrained by the width of the electrode tab. The electrode lead 10 according to the present disclosure enlarges the cross-sectional area of the second portion 200 by increasing the width of the second portion 200. In this case, compared to designing the width of the entire electrode lead to be the same as the width of the electrode tab, the average cross-sectional area of the electrode lead 10 may be increased to design the resistance value of the electrode lead 10 to be low.

Additionally, in the electrode lead 10 according to the present disclosure, the plating layer 300 is formed mainly on the first portion 100 that is coupled to the electrode tab of the electrode assembly, thereby effectively preventing damage to the first portion 100 inserted into the internal space of the case of the secondary battery. Specifically, an electrolyte is injected into the internal space of the case of the secondary battery, and the plating layer 300 is formed on the first portion 100 to minimize or block contact between the copper region of this first portion 100 and the electrolyte, thereby preventing or delaying oxidation of the first portion 100 by the electrolyte.

Therefore, the plating layer 300 is formed on the first portion 100, which has high durability, and thus the first portion 100 may not be easily damaged even in an internal environment where the potential fluctuates due to charging and discharging of the secondary battery.

An electrode assembly is a laminate including a plurality of electrodes and separators, and may have various structures. For example, the electrode assembly may be a stacked electrode assembly in which a plurality of electrodes and separators are alternately stacked. Additionally, the electrode assembly may be a stack-folding electrode assembly in which a plurality of electrodes and separators are stacked in one direction and then folded, or a jelly roll-type electrode assembly in which electrodes and separators are alternately stacked and then wound.

The electrode tab is formed on or connected to each electrode included in the electrode assembly, and this may correspond to the electrode uncoated portion excluding the electrode coated portion coated with an active material in the electrode. Additionally, the electrode tab may be a conductive tab or sheet separately connected to the electrode.

The case of the secondary battery is an exterior material surrounding the electrode assembly and the electrode tab described above, and may be configured in various ways. For example, a rigid exterior material made of metal or non-metal may be used for the case of the secondary battery.

Additionally, the case of the secondary battery may be a pouch-type exterior material formed of a laminate sheet. This laminate sheet may include a metal layer such as aluminum or stainless steel. At this time, a resin layer may be formed on the outer surface and/or inner surface of the metal layer.

The metal layer may serve as a substrate that maintains mechanical strength and a barrier layer that prevents the penetration of moisture and oxygen. The metal layer may be made of aluminum or an aluminum alloy so as to exhibit the function of improving the strength of the battery case in addition to the function of preventing the inflow or leakage of foreign substances such as gas and moisture. The aluminum alloy may include alloy numbers 8079, 1N30, 8021, 3003, 3004, 3005, 3104, 3105, and the like, which may be used alone or in combination of two or more.

The first resin layer coated on the outer surface of the metal layer should have excellent resistance to the external environment in order to protect the electrode assembly from the outside, and thus the first resin layer is required to have excellent tensile strength and durability relative to its thickness. Materials for the first resin layer may include a polyester-based resin such as polyethylene terephthalate (PET) and polyethylene naphthalate (PEN), a polyolefin-based resin such as polyethylene and polypropylene, and the like.

The second resin layer coated on the inner surface of the metal layer may be bonded to each other to seal the internal space of the case of the secondary battery, and the second resin layer may be formed of a polyolefin-based resin. For example, materials for the second resin layer may include casted polypropylene (CPP), chlorinated polypropylene, polyethylene, ethylene propylene copolymer, polyethylene and acrylic acid copolymer, polypropylene and acrylic acid copolymer, and the like.

Meanwhile, the electrode lead 10 according to the present disclosure is coupled to the above-described electrode tab to connect the electrode assembly and an external device, and at least a part of the electrode lead 10 may be exposed to the outside of the case of the secondary battery. This electrode lead 10 is composed of a conductor through which current passes, and the lower the resistance value of the electrode lead 10, the higher the energy efficiency of the secondary battery.

The electrode lead 10 according to the present disclosure may be configured in a structure having a low resistance value. Specifically, the electrode lead 10 may include a first portion 100 coupled to the electrode tab; and a second portion 200 connected to the first portion 100 and protruding to the outside of the case of the secondary battery.

Here, the width L1 of the first portion 100 may be formed to be shorter than the width L2 of the second portion 200. In this case, the width L1 of the portion inserted into the case of the secondary battery may be formed to be narrow, while the width L2 of the portion inserted outside the case of the secondary battery may be formed to be relatively wide.

In consideration of the electrolyte injected into the internal space of the case of the secondary battery, the width L1 of the portion of the electrode lead 10 inserted into the case of the secondary battery may be preferably formed as narrow as possible. However, if the width of the entire electrode lead 10 is formed to be narrow, the electrode lead 10 will have a narrow cross-sectional area, which may lead to a problem of having a high resistance value.

In the case of the electrode lead 10 according to the present disclosure, there is an advantageous effect of improving the space utilization of the internal space of the case of the secondary battery by forming the width L1 of the portion inserted into the case of the secondary battery narrow, while simultaneously lowering the resistance value of the electrode lead 10 by forming the width L2 of the portion protruding to the outside of the case of the secondary battery wide.

Meanwhile, the first portion 100 and the second portion 200 may have various structures. For example, the first portion 100 and the second portion 200 may have a laminated structure in which different types of conductors are laminated.

The first portion 100 may have a three-layer structure in which an aluminum layer 110, a copper layer 120, and an aluminum layer 130 are laminated. Additionally, the second portion 200 may have a three-layer structure in which an aluminum layer 210, a copper layer 220, and an aluminum layer 230 are laminated. In this way, since each of the first portion 100 and the second portion 200 constituting the electrode lead 10 includes copper layers 120, 220 with low electrical resistance, the electrical resistance value of the electrode lead 10 may be reduced compared to the case where the entire electrode lead 10 is composed only of an aluminum layer with relatively high electrical resistance.

At this time, the aluminum layer 110 that is the lowermost layer of the first portion 100 and the aluminum layer 210 that is the lowermost layer of the second portion 200 may have the same thickness. Likewise, the copper layer 120 included in the first portion 100 and the copper layer 220 included in the second portion 200 may have the same thickness. Additionally, the aluminum layer 130 that is the uppermost layer of the first portion 100 and the aluminum layer 230 that is the uppermost layer of the second portion 200 may have the same thickness.

Specifically, in the case of the first portion 100, the plurality of aluminum layers 110, 130 constituting the first portion 100 may have substantially the same thickness. Additionally, the thicknesses ratio of the aluminum layer 110 and the copper layer 120 may be formed to be 1:1 to 1:8. In this case, by increasing the thickness of the copper layer 120 with relatively low resistance, there is an advantageous effect of lowering the resistance value of the first portion 100.

Additionally, in the case of the second portion 200, the plurality of aluminum layers 210, 230 constituting the second portion 200 may have substantially the same thickness. Additionally, the thicknesses ratio of the aluminum layer 210 and the copper layer 220 may be formed to be 1:1 to 1:8. In this case, by increasing the thickness of the copper layer 220 with relatively low resistance, there is an advantageous effect of lowering the resistance value of the second portion 200.

Meanwhile, a plating layer 300 may be formed on the first portion 100 of the electrode lead 10 inserted into the case of the secondary battery. The plating layer 300 may be made of a metal with low reactivity to protect the first portion 100 from the electrolyte injected into the internal space of the case of the secondary battery.

In particular, since the first portion 100 includes a copper layer 120 made of a highly reactive copper material, the plating layer 300 may be formed on the surface of the first portion 100 where the copper layer 120 is exposed. In this case, the highly reactive copper layer 120 is prevented from contacting the electrolyte within the case of the secondary battery, and thus there is an advantageous effect of preventing oxidation of the copper layer 120.

Additionally, the plating layer 300 may be formed only on the surface of the first portion 100 where the copper layer 120 is exposed, and the plating layer 300 may not be formed on the surface where the copper layer 120 is not exposed. Specifically, the first portion 100 has a multilayer cuboidal structure in which an aluminum layer 110, a copper layer 120, and an aluminum layer 130 are sequentially laminated, and one surface of the first portion 100 may be connected to the second portion 200. At this time, the copper layer 120 is exposed on three sidewalls of the first portion 100, and the metal layer 300 may be formed only on the three sidewalls of the first portion 100 where the copper layer 120 is exposed. In this case, there is an advantageous effect of minimizing the use of a metal material used in forming the plating layer 300, while completely blocking the exposure of the copper layer 120.

The plating layer 300 is made of a metal with low reactivity, and various materials may be used here. For example, the plating layer 300 may be made of a nickel (Ni) material with low reactivity. In this case, oxidation of the copper layer 120 by the electrolyte may be effectively prevented.

Meanwhile, the plating layer 300 may be formed on the surface of the second portion 200 where the first portion 100 protrudes. Specifically, the plating layer 300 is formed only on the surface of the second portion 200 where the copper layer 220 is exposed, and may be formed only on the surface where the first portion 100 protrudes. In this case, the copper layer 220 of the second portion 200 may be prevented from contacting the electrolyte within the case of the secondary battery, thereby preventing oxidation of the corresponding copper layer 220.

Additionally, although not illustrated in FIG. 2, the plating layer 300 may be formed only on the first portion 100 among the first portion 100 and the second portion 200. In this case, the plating layer 300 is formed only on the surface of the first portion 100 where the copper layer 120 is exposed, and the plating layer 300 may not be formed on the surface of the first portion 100 where the copper layer 120 is not exposed.

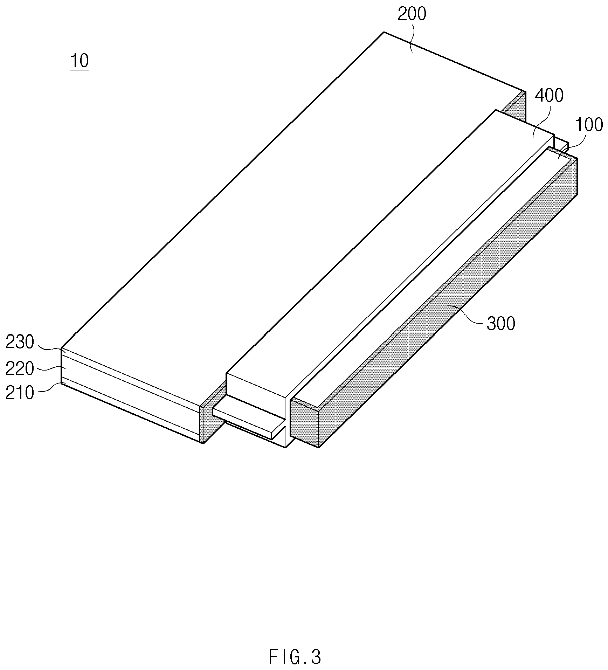

FIG. 3 is a view showing a state in which a lead film is attached to the first portion of the electrode lead according to the present disclosure.

Referring to FIG. 3, a lead film 400 made of an insulating material may be attached to the first portion 100 constituting the electrode lead 10. The lead film 400 is bonded to the electrode lead 10, and thus, when the electrode lead 10 is later inserted into the battery case, an insulation state between the electrode lead 10 and the battery case may be maintained.

This lead film 400 may be attached to the electrode lead 10 in various ways. For example, the lead film 400 may be an insulating tape in which an adhesive layer is formed on one surface thereof, and may be attached to the electrode lead 10 so that the adhesive layer faces the electrode lead 10.

Additionally, as illustrated in FIG. 3, the lead film 400 may cover a boundary area of the first portion 100 that is in contact with the second portion 200. At this time, the second portion 200 with a relatively wide width is positioned outside the boundary area, and thus the lead film 400 may be prevented from moving outward by the second portion 200. In this case, there is an advantageous effect of preventing the position of the lead film 400 from changing even during repeated charging and discharging of the electrode assembly included in the electrode lead 10.

### Method for manufacturing electrode lead

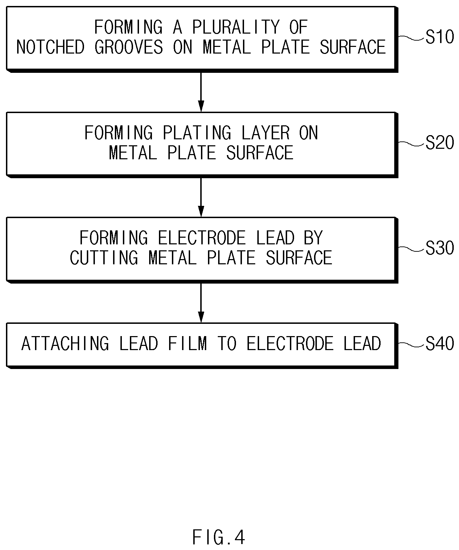

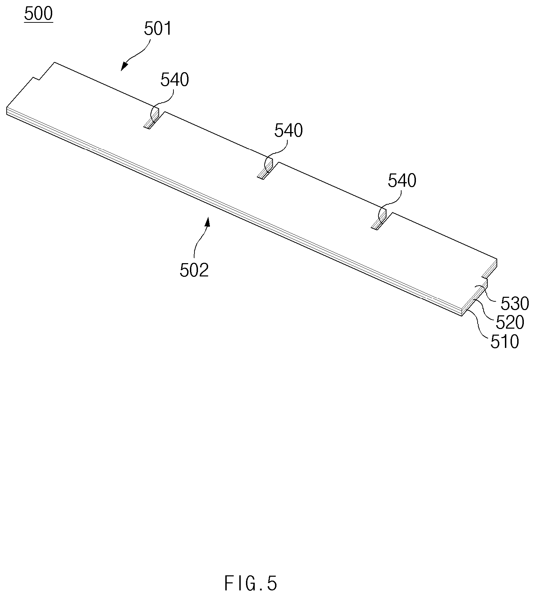

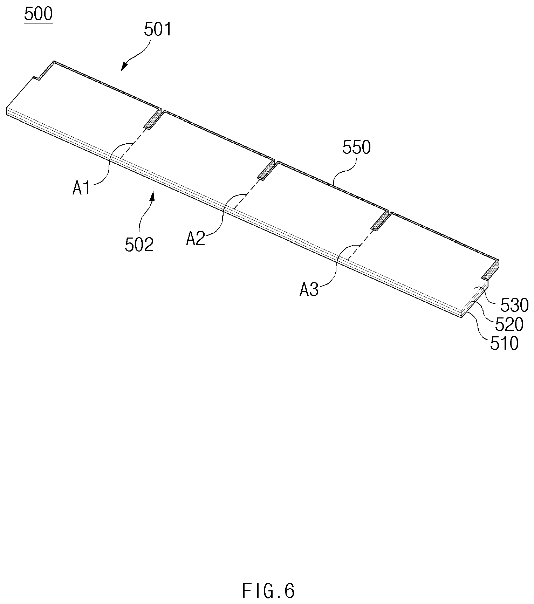

FIG. 4 is a flowchart sequentially showing the steps of a method for manufacturing an electrode lead according to the present disclosure. FIG. 5 is a view for describing a notching step in the method for manufacturing an electrode lead according to the present disclosure. FIG. 6 is a view for describing a plating step in the method for manufacturing an electrode lead according to the present disclosure.

Referring to FIGS. 4 to 6, a method for manufacturing an electrode lead according to the present disclosure is a method for manufacturing an electrode lead 10 connected to an electrode assembly of a secondary battery, and the method for manufacturing an electrode lead may include a notching step (S10) of forming a plurality of notched grooves 540 on one side 501 of a metal plate surface 500; a plating step (S20) of forming a plating layer 550 on one side 501 of the metal plate surface 500 and on the plurality of notched grooves 540; and a cutting step (S30) of cutting the metal plate surface 500 in linear directions A1, A2, A3 from the center of each of the plurality of notched grooves 540 to the other side 502 of the metal plate surface 500.

According to this method for manufacturing an electrode lead, an electrode lead 10 in which the width of the portion inserted into the case of a secondary battery and coupled to the electrode tab of the electrode assembly is formed to be narrow, and the width of the portion protruding to the outside of the case of the secondary battery is formed to be relatively wide, may be manufactured. In this case, there is an advantageous effect of improving the space utilization of the internal space of the case of the secondary battery by forming the width of the portion inserted into the case of the secondary battery narrow. Additionally, there is an advantageous effect of lowering the resistance value of the electrode lead 10 by forming the width of the portion protruding to the outside of the case of the secondary battery wide.

In the electrode lead 10 manufactured by the method for manufacturing an electrode lead according to the present disclosure, the second portion excluding the first portion coupled to the electrode tab of the electrode assembly may have a wider width than the first portion. At this time, the electrode lead 10 has the second portion having a relatively large cross-sectional area, so that the average cross-sectional area of the electrode lead 10 may also increase. Therefore, the electrode lead 10 manufactured by the method for manufacturing an electrode lead according to the present disclosure has a relatively low overall resistance value, and thus may be suitable for the design of fast-charging and high-power batteries.

Specifically, the first portion is a portion that is welded to the electrode tab of the electrode assembly, and thus the first portion may have the same width as the electrode tab. On the other hand, the width of the second portion that is not welded to the electrode tab may not be constrained by the width of the electrode tab. The electrode lead 10 manufactured by the method for manufacturing an electrode lead according to the present disclosure enlarges the cross-sectional area of the second portion 200 by increasing the width of the second portion. In this case, compared to designing the width of the entire electrode lead to be the same as the width of the electrode tab, the average cross-sectional area of the electrode lead 10 may be increased to design the overall resistance value to be low.

Meanwhile, referring to FIG. 5, the above-described notching step (S10) may be a step of forming a plurality of notched grooves 540 on one side 501 of a metal plate surface 500 having a three-layer structure laminated in the order of an aluminum layer 510, a copper layer 520, and an aluminum layer 530. Here, the notched grooves 540 may be formed in various ways.

For example, the notched grooves 540 may be formed by an optical device such as laser equipment. Additionally, the notched grooves 540 may be formed by press equipment physically pressing one side 501 of the metal plate surface 500.

The plurality of notched grooves 540 formed on one side 501 of the metal plate surface 500 in the notching step (S10) may be formed in various orders. For example, the plurality of notched grooves 540 may be formed sequentially along one direction, or the plurality of notched grooves 540 may be formed simultaneously.

The interval between the plurality of notched grooves 540 formed in the notching step (S10) may be configured in various ways. For example, the interval between the plurality of notched grooves 540 formed on one side 501 of the metal plate surface 500 may all have the same size.

Meanwhile, referring to FIG. 6, the above-described plating step (S20) may be a step of forming a plating layer 550 on one side 501 of the metal plate surface 500 and on the surface of the plurality of notched grooves 540 where the copper layer 520 is exposed. This plating layer 550 may be made of a metal with low reactivity.

When the metal plate surface 500 is processed into an electrode lead 10, the portion where the plating layer 550 is formed may correspond to the portion inserted into the case of the secondary battery and connected to the electrode tab of the electrode assembly. This plating layer 550 is made of a metal with low reactivity, and thus may protect the electrode lead 10 from the electrolyte injected into the internal space of the case of the secondary battery. Specifically, the plating layer 550 may prevent or delay oxidation of the portion of the electrode lead 10 inserted into the internal space of the case of the secondary battery by the electrolyte.

In particular, the metal plate surface 500 includes a copper layer 520 made of a highly reactive copper material, and the plating layer 550 may be formed on the metal plate surface 500 to block the exposure of this copper layer 520. After the metal plate surface 500 is processed into the electrode lead 10, the plating layer 550 may prevent the highly reactive copper layer 520 from contacting the electrolyte inside the secondary battery case, thereby preventing oxidation of the copper layer 520. That is, the plating layer 550 is formed on the portion of the metal plate surface 500 that is to be inserted into the case of the secondary battery after being processed into the electrode lead 10, thereby preventing oxidation of the copper layer 520 of the corresponding portion by the electrolyte.

Meanwhile, the above-described plating step (S20) may be a step of forming a plating layer 550 made of a nickel material on one side 501 of the metal plate surface 500 and on the plurality of notched grooves 540. In this case, the plating layer 550 is made of a nickel (Ni) material with low reactivity, and thus, after the metal plate surface 500 is processed into the electrode lead 10, oxidation of the copper layer 520 of the electrode lead 10 by the electrolyte inside the case of the secondary battery may be effectively prevented.

In the plating step (S20), the plating layer 550 made of the Ni material may be formed mainly on the portion of the metal plate surface 500 that is to be inserted into the case of the secondary battery after being processed into the electrode lead 10. That is, the plating layer 550 may be formed only on the surface of the metal plate surface 500 where the copper layer 520 is exposed.

The cutting step (S30) is a step of cutting the metal plate surface 500 in linear directions A1, A2, A3 from the center of each of the plurality of notched grooves 540 to the other side 502 of the metal plate surface 500, and each of the cut metal plate surfaces 500 may be an electrode lead 10. In the cutting step (S30), the cutting of the metal plate surface 500 may be performed in various ways. For example, in the cutting step (S30), each of the cutting lines A1, A2, A3 of the metal plate surface 500 may be simultaneously cut by cutting equipment such as a laser cutter.

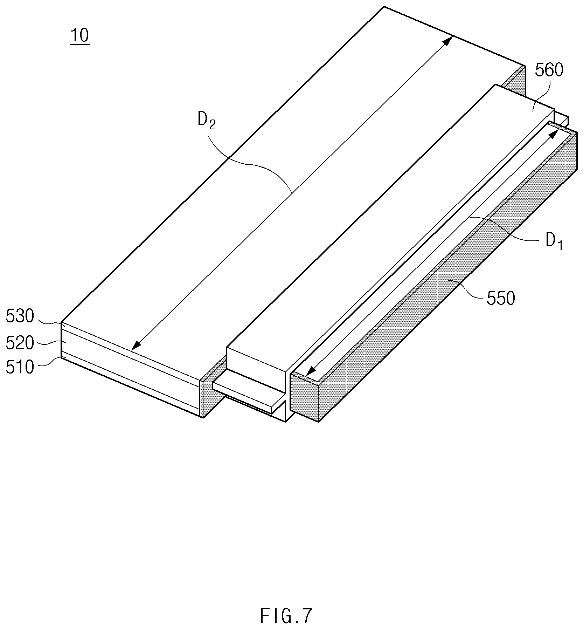

FIG. 7 is a view for describing a film attachment step in the method for manufacturing an electrode lead according to the present disclosure.

The method for manufacturing an electrode lead according to the present disclosure may further include a film attachment step (S40) of attaching a lead film 560 made of an insulating material to the cut metal plate surface 500, which is performed after the cutting step (S30). That is, the film attachment step (S40) may be a step of attaching the lead film 560 to each of the cut metal plate surfaces.

The lead film 400 is bonded to the electrode lead 10, and thus, when the electrode lead 10 is later inserted into the battery case, an insulation state between the electrode lead 10 and the battery case may be maintained.

Meanwhile, in the film attachment step (S40), the lead film 560 may be attached to various positions of the cut metal plate surface 500. For example, the cut metal plate surface 500 may include a first portion having a relatively narrow width D₁ and a second portion connected to the first portion and having a relatively wider width D₂ than the first portion. In the film attachment step (S40), the lead film 560 may be attached to a boundary area of the first portion that is in contact with the second portion.

At this time, the second portion with a relatively wide width D₂ is positioned outside the above-described boundary area, and thus the lead film 560 may be prevented from moving outward by the second portion. In this case, there is an advantageous effect of preventing the position of the lead film 560 from changing even during repeated charging and discharging of the electrode assembly included in the electrode lead 10.

The present disclosure has been hereinabove described with regard to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

### [List of Reference Numerals]

| | | | |
|---|---|---|---|
| 10: | Electrode lead | 100: | First portion |
| 110, 130: | Aluminum layer | 120: | Copper layer |
| 200: | Second portion | 210, 230: | Aluminum layer |
| 220: | Copper layer | 300: | Plating later |
| 400: | Lead film | 500: | Metal plate surface |
| 510, 530: | Aluminum layer | 520: | Copper layer |
| 540: | Notched groove | 550: | Plating later |
| S10: | Notching step | S20: | Plating step |
| S30: | Cutting step | S40: | Film attachment step |

## Claims

1. An electrode lead connected to an electrode assembly of a secondary battery, the electrode lead comprising:
a first portion coupled to an electrode tab of the electrode assembly; and
a second portion connected to the first portion and protruding to the outside of a case of the secondary battery,
wherein the first portion is formed to have a narrower width than the second portion, and
wherein a plating layer is formed on at least a part of the first portion and the second portion.

2. The electrode lead according to claim 1,
wherein each of the first portion and the second portion has a three-layer structure laminated in the order of an aluminum layer, a copper layer, and an aluminum layer.

3. The electrode lead according to claim 2,
wherein the plating layer is formed on a surface of the first portion where the copper layer is exposed and on a surface of the second portion where the first portion is connected.

4. The electrode lead according to claim 2,
wherein the thicknesses of the plurality of aluminum layers are identical, and the thickness ratio of the aluminum layer and the copper layer is 1:1 to 1:8.

5. The electrode lead according to claim 1,
wherein the plating layer is made of a nickel material.

6. The electrode lead according to claim 1,
wherein a lead film made of an insulating material is attached to the first portion.

7. The electrode lead according to claim 6,
wherein the lead film covers a boundary area of the first portion that is in contact with the second portion.

8. A method for manufacturing an electrode lead connected to an electrode assembly of a secondary battery, the method comprising:
a notching step of forming a plurality of notched grooves on one side of a metal plate surface;
a plating step of forming a plating layer on one side of the metal plate surface and on the plurality of notched grooves; and
a cutting step of cutting the metal plate surface in a linear direction from the center of each of the plurality of notched grooves to the other side of the metal plate surface.

9. The method for manufacturing an electrode lead according to claim 8,
wherein the notching step comprises:
a step of forming a plurality of notched grooves on one side of a metal plate surface having a three-layer structure laminated in the order of an aluminum layer, a copper layer, and an aluminum layer.

10. The method for manufacturing an electrode lead according to claim 8,
wherein the notching step comprises:
a step of forming a plurality of notched grooves at equal intervals on one side of the metal plate surface.

11. The method for manufacturing an electrode lead according to claim 9,
wherein the plating step comprises:
a step of forming a plating layer on one side of the metal plate surface and on a surface of the plurality of notched grooves where the copper layer is exposed.

12. The method for manufacturing an electrode lead according to claim 8,
wherein the plating step comprises:
a step of forming a plating layer made of a nickel material on one side of the metal plate surface and on the plurality of notched grooves.

13. The method for manufacturing an electrode lead according to claim 8, further comprising:
a film attachment step of attaching a lead film made of an insulating material to the cut metal plate surface, which is performed after the cutting step.

14. The method for manufacturing an electrode lead according to claim13,
wherein the cut metal plate surface comprises a first portion having a relatively narrow width and a second portion connected to the first portion and having a wider width than the first portion, and
wherein the film attachment step is a step of attaching the lead film to a boundary area of the first portion that is in contact with the second portion.
